# EUROPEAN PATENT SPECIFICATION

(11) **EP 4 203 841 B1**
(45) Date of publication and mention of the grant of the patent: **18.12.2024**
(21) Application number: 21766149.5
(22) Date of filing: 20.08.2021
(51) Int. Cl.: A61C 3/025, A61C 17/02, A61C 1/10, B24C 7/00, B24C 5/02, B24C 5/04

(54) **HANDPIECE, SYSTEM AND METHOD FOR CONNECTING A HANDPIECE WITH A SUPPLY SYSTEM**
HANDSTÜCK, SYSTEM UND VERFAHREN ZUM VERBINDEN EINES HANDSTÜCKS MIT EINEM VERSORGUNGSSYSTEM
PIÈCE À MAIN, SYSTÈME ET PROCÉDÉ DE CONNEXION D'UNE PIÈCE À MAIN À UN SYSTÈME D'ALIMENTATION

(30) Priority: 25.08.2020 EP 20192703
(43) Date of publication of application: 05.07.2023
(73) Proprietor: Ferton Holding S.A., 2800 Delémont (CH)
(72) Inventor: DONNET, Marcel, 01530 St. Jean de Gonville (FR); BEANI, Florent, 01170 Gex (FR); FOURNIER, Maxime, 1010 Lausanne (CH); SAUVAGEOT-MAXIT, Karine, 01420 Corbonod (FR)
(74) Representative: Müller Schupfner & Partner Patent- und Rechtsanwaltspartnerschaft mbB (Muc)
(86) International application number: PCT/EP2021/073113
(87) International publication number: WO 2022/043199

(56) References cited:
- CN-U- 209 107 639
- US-A- 5 090 904
- US-A1- 2016 262 847
- US-B1- 6 485 303

## Description

### TECHNICAL FIELD

The present invention relates to a handpiece for use in treatment of tooth by means of a jet of an abrasive powder mixed with air and a system and a method for connecting such handpiece with a supply system.

### BACKGROUND ART

The air-polishing technique is used in the dental field in order to remove stains and coloration from the tooth and to remove dental biofilms. This powder blasting technique uses a low abrasive powder. The powder jet is surrounded by a water spray in order to trap the dust generated and to avoid mist during treatment. This technique strongly depends on the nozzle used.

The difficulty with this system is to get a handpiece connection which allows a smooth transfer from high pressure (e.g. 4 bars) air-powder jet to the handpiece together with a water transfer. One issue is that powder jets are also abrasive for the internal components of the device. Further, it is desired to hinder water from entering into the air-powder channel during handpiece disconnection and re-connection since such moisture will hamper the powder/air stream.

Furthermore, the handpiece is sterilized between each treatment putting high strains on the materials and on the handpiece assembly. Such strains can be caused by thermal cycles of 134 °C and up to eight cycles per day. Therefore, high-end plastic materials or metallic materials are used to withstand theses stresses.

US 2003180684 A1 discloses a construction where the air-powder connection is well separated from the water connection in order to avoid mixing of water with powder.

The prior art partly resolves such fitting problem, nevertheless, the assembly has still a low resistance to strains occurring in the thermal cycle used for sterilization. That is, the external plastic part provides handpiece stability and the thermal strains makes it fragile over time leading to plastic parts breakage, either if the handpiece falls on the floor or even just after some sterilization cycles (e.g. beyond 100). However, the plastic construction is desired for user comfort because the plastic isolates the hand of the user e.g. from the heated water line required for patient comfort.

The hand-held dental instrument for intraoral abrading of teeth of US 6 485 303 B1 includes a light-weight body made from a high temperature material and having internal bores or passageways for permitting fluid flow through the body. CN 209 107 639 U discloses a pneumatic dental sand-blasting machine, including nozzle assembly and cylinder block set.

Therefore, it is an object of the present invention to provide a handpiece that is insusceptible to strains due to sterilization cycles while it provides all comfort requirements for a user and a patient, a system including said handpiece and a method of connecting or disconnecting said handpiece with or from a supply system.

### SUMMARY OF THE INVENTION

The object is achieved by a handpiece including the features of claim 1, a system including said handpiece including the features of claim 13 and a method including the features of claim 14.

According to the present invention, there is provided a handpiece for use in treatment of tooth by means of a jet of an abrasive powder mixed with air, the handpiece being an elongated member extending along a handpiece axis, the handpiece comprising: a tubular connector extending along the handpiece axis, wherein the connector is configured to be connected to a supply system at a first axial side of the connector, wherein the connector has at least two ports at a second axial side of the connector, a first port configured to be connected to a first supply line of a nozzle arrangement and a second port configured to be connected to a second supply line of the nozzle arrangement, wherein the first port and the second port are arranged offset to each other in the handpiece axis, wherein the tubular connector is an integral element, preferably a mono block element, and wherein the tubular connector is made of metal. The connector includes an exhaust opening at the circumference surface of the connector, wherein the exhaust opening is configured to connect the inside of the connector with the outside of the connector. The exhaust opening is located at the same position as compared to the first port with respect to the handpiece axis.

According to a further aspect of the present invention, the dental powder used in treatment of tooth is be sodium bicarbonate, glycine, calcium carbonate, aluminum trihydroxide, erythritol, hydroxylapatite or threhalose. The handpiece has an extension along the handpiece axis that is larger than in any other direction. The handpiece has a substantially cylindrical shape extending along the handpiece axis. The handpiece axis is the axis of the cylindrical shape. Therefore, the handpiece is advantageously tangible for a user. The handpiece is a hollow body defining an accommodation space within the handpiece. As a result, the user's hand holding the handpiece is well separated from lines existing within the handpiece. Further, the handpiece is a separate element, which can be connected to a nozzle arrangement at a first distal handpiece side and to a supply system at a second proximal handpiece side. That is, the supply system communicates with the nozzle arrangement via the handpiece, in case the three elements are connected to each other. At the distal handpiece side, the handpiece has a smaller diameter than at the proximal handpiece side. As a result, the handpiece has a center of gravity which is located closer to the proximal handpiece side. Therefore, the operability of the handpiece is improved.

According to an aspect of the present invention, the nozzle arrangement is an elongated member. The nozzle arrangement is attachable or attached to the handpiece at the distal handpiece side. The nozzle arrangement has a first proximal nozzle arrangement side and an opposite second distal nozzle arrangement side. The nozzle arrangement is attached to the first distal handpiece side with the first proximal nozzle arrangement side. The nozzle arrangement has the first supply line configured to transfer powder mixed with air, and the second supply line configured to transfer water. At least a part of the first supply line protrudes from the first proximal nozzle arrangement side of the nozzle arrangement. The nozzle arrangement is configured to discharge powder mixed with air and water onto a tooth of a patient to be treated. Within the nozzle arrangement, the first supply line and the second supply line are merged into one discharge line. The discharge line is configured to discharge the powder mixed with air and water to the second distal nozzle arrangement side. The nozzle arrangement is configured to be a disposable product. Alternatively, the nozzle arrangement is an element that can be used several times. In this case, the nozzle arrangement is configured to be sterilized several times without being damaged. Therefore, the nozzle arrangement is made of metal.

According to a further aspect of the present invention, the tubular connector is accommodated within the handpiece. The connector has an elongated body. The connector includes an axis (e.g. a central axis or a rotational axis) that is aligned with the handpiece axis even though the handpiece is usually not symmetrical with regard to such axis. In other words, the connector is positioned inside the handpiece in a centralized manner (i.e. within the accommodation space of the handpiece). The first axial side and the second axial side of the connector are located at opposite sides of the connector. The connector is arranged within the handpiece such that the first axial side of the connector is closer to the second proximal handpiece side than the second axial side of the connector which extends towards the distal side of the handpiece. The connector has a smaller outer diameter at its second axial side as compared to an outer diameter at its first axial side. In other words, the connector has a tapered shape towards the second axial side of the connector. As a result, the space within the handpiece is effectively used.

According to a further aspect of the present invention, the connector is configured as a one-piece member so as to have a high robustness. Further, the connector is manufactured of a solid raw body by drilling, for example. Consequently, for example, the connector is not composed of more than one member and has thus no welding or any other connection. Therefore, the connector is highly robust against thermal strains. The connector is made of stainless steel. The connector is a receptacle for receiving the supply system or a part of the supply system. In addition, the connector also receives the first and/or second supply line via the first and/or second ports. Further, the connector has a stepped outer surface, such that the connector can be sufficiently held within the handpiece.

According to a further aspect of the present invention, the supply system is reversibly connectable or connected to the handpiece. The supply system is connectable to the second proximal handpiece side. The supply system is a source of highpressure air (e.g. 4 bars) mixed with powder and water, wherein the powder - air mixture and the water are supplied separately from each other. The supply system includes a cord connector, which is inserted into the connector such that the supply system is connected to the connector. That is, the connector functions as a receptacle for the cord connector. The supply system or a part of the supply system is held within the connector by means of a screwing socket, a snap mechanism or other suitable means. The supply system comprises an integrated powder container as a source of powder supplied to the handpiece.

According to a further aspect of the present invention, a port is a through-hole extending through the material of the connector. The port is configured to receive a part of the nozzle arrangement. In other words, the nozzle arrangement is at least partly inserted into the first port and/or the second port. Further, the first port and the second port include a sealing element configured to seal the first port and the second port in case the nozzle arrangement is connected to the handpiece. In the connector, the first port and the second port are arranged at different positions with respect to the handpiece axis. As a result, it can be avoided that water erroneously enters into the first port or powder erroneously enters into the second port. The supply system is adapted accordingly in order to bring the first port and the second port in communication with the respective supply line in a separated manner. The second port includes a passage line extending at least partly through the connector (i.e. through the material of the connector). In other words, the second port has a longer passage length as compared to the first port. Therefore, the separate locations of the first and second port are realized without the need for an additional supply line outside and parallel to the connector.

According to a further aspect of the present invention, as compared to the prior art, the present invention combines the advantage of a separated supply of powder-air mixture and water to the nozzle arrangement so as to avoid a mixture of water and powder-air within the handpiece, which causes a blockage of the supply line. This separation is realized by providing the specific configuration of the connector, including the first port and the second port located at different positions. Further, the handpiece of the present invention is unsusceptible to thermal strains due to sterilization processes executed several times a day. This advantage is achieved by providing a connector that is an integral element and that withstands large thermal loads as well as alternating thermal loads. Consequently, the handpiece is highly robust, because even if it falls onto the floor, the connector is less prone to be damaged, even after several thousands of sterilization cycles.

According to a further aspect of the present invention, the circumference surface of the connector is the lateral area or surface of the connector. The exhaust opening is a through-hole extending through the material of the connector. The exhaust opening forms a passage having a central axis that extends orthogonal to the handpiece axis. Alternatively, the passage has a central axis that is inclined with respect to the handpiece axis. The exhaust opening is created by milling one side of the connector until a through hole is created. In this case, the connector has a generally tubular form except of the surrounding of the exhaust opening in which the connector has a flattened surface. Alternatively, there is provided a plurality of exhaust openings within the connector. The exhaust openings are arranged in a ring like manner so as to be equally distributed around the circumference of the connector.

According to a further aspect of the present invention, the exhaust opening provides the effect that water is prevented from entering into the first port. In more detail, water can be accumulated within the connector, when the supply system is disconnected from the handpiece (i.e. from the connector). During the disconnection of the supply system (i.e. by pulling out the supply system or a part of the supply system of the connector) some water is aspirated by a so-called piston effect. The piston effect is increased in case a sealing element is provided at the supply system and/or the connector. In other words, water is sucked out of the second port and/or out of the second supply line, if the supply system is disconnected from the handpiece. Such water accumulates within the connector and creates droplets. The piston effect is increased by the connector being an integral element because the integral connector is hermetically sealed. If the supply system is reconnected to the handpiece, that is, is reinserted into the connector, the water is pushed further into the connector and into the first port. Therefore, the water comes in contact with powder. This might lead to an undesired blockage of the nozzle arrangement by powder bundles.

In this respect, according to a further aspect of the present invention, the exhaust opening generally provides two advantageous effects. First, the exhaust opening provides the effect that if the supply system is inserted into the connector, a pressure inside the connector does not rise. That is, by providing the exhaust opening, air that is pushed into the connector by inserting the supply system into the connector, is discharged through the exhaust opening without increasing the pressure within the connector. Therefore, water existing inside the connector is less prone to enter into the first port. Further, if the droplet itself is pushed further into the connector by the supply system, the droplet is discharged through the exhaust opening before it enters into the first port. As a result, water within the connector is not readily pushed towards or into the first port.

Second, the exhaust opening is used as a ventilation hole. In more detail, if the supply system is disconnected from the handpiece (i.e. the supply system or a part thereof is pulled out of the connector) a generation of negative pressure or low pressure within the connector is avoided. That is, if the supply system is pulled out, ambient air enters into the connector through the exhaust opening in order to compensate the negative pressure. As a result, an aspiration of water out of the second port and/or out of the supply system is avoided. In other words, the stroke of the piston effect is significantly reduced. Due to the staggered arrangement of the first port and the second port (i.e. offset arrangement of the first port and the second port along the handpiece axis), it is ensured that if the second port is disconnected from the supply system, the second port is immediately in communication with the exhaust opening.

The above described problem of the piston effect primarily arises if an integral member is used as the connector. In the prior art, where connectors are composed of several separate components, air and water can be transferred through small openings or gaps due to manufacturing tolerances and thus such problem did not arise in the prior art.

Preferably, the exhaust opening is formed in the connector so as to be adjacent to the first port.

According to a further aspect of the present invention, the exhaust opening is located in the vicinity of the first port. The position of the exhaust opening in the vicinity of the first port further secures that water is discharged through the exhaust opening before it enters into the first port. Consequently, the negative effect of the piston effect is avoided more reliably. Further, immediately after disconnecting the supply system from the second port, the second port is in communication with the exhaust opening so as to compensate a negative pressure within the connector.

According to a further aspect of the present invention, a passage area of the exhaust opening is in a range of 0.8 to 1.2 times the mean inner diameter of the connector. This ratio provides the most effective configuration for avoiding insertion of water into the first supply line. The exhaust opening extends along the handpiece axis almost to the second port. Thus, optimal sealing properties is achieved while at the same time the piston effect when disconnecting the supply system is suppressed.

Preferably, the connector is configured to transfer air and/or water through the exhaust opening.

According to a further aspect of the present invention, as mentioned above, air is introduced and discharged through the exhaust opening. Further, water is discharged through the exhaust opening. Therefore, the exhaust opening is formed such that a resistance (i.e. flow resistance) for water and/or air to pass through the exhaust opening is as small as possible. Accordingly, the exhaust opening has chamfered edges, for example. Furthermore, the opening is configured to be particularly favorable to the flow. Therefore, the exhaust opening has at least one fin arranged at the edge of the opening so as to guide a medium. As a result, vortexes are avoided and air and/or water is smoothly transferred by the exhaust opening.

Preferably the exhaust opening has a larger passage area as compared to that of the first port.

According to a further aspect of the present invention, by providing the exhaust opening having a larger passage area as compared to that of the first port, the water and/or air is easier discharged through the exhaust opening than being introduced into the first port. This can further secure that no water is inserted into the first port. In other words, the above feature provides the effect that the flow resistance for water passing through the exhaust opening is smaller as compared to the flow resistance for water passing through the first port. Since the water always seeks the easiest way, it is reliably discharged through the exhaust opening.

Preferably, the handpiece includes a plastic housing at least partly surrounding the connector.

According to a further aspect of the present invention, the housing is formed so as to provide an increased grip to a user's hand. Therefore, the operability of the handpiece is improved. Further, the housing provides an isolation effect, in that the heat of hot water flowing through the lines within the handpiece in operation, is not directly transmitted to a user's hand. Therefore, the comfort of a user using the handpiece is improved. According to the present embodiment, the housing is not used for stability purpose and is thus not essential for the durability of the handpiece. On the other hand, the housing is used for comfort and operational purpose only, such that the housing is designed accordingly. In other words, the housing has not to bear any mechanical loads, such that even after several thousand sterilization cycles the housing is not tend to become brittle. As a result, the degree of freedom in the design of the housing is increased. The housing is an elongated member extending at least partly along the handpiece axis. In addition, the housing has an opening at each axial side thereof (i.e. one opening at the distal handpiece side and one opening at the second proximal handpiece side). Further, the housing has a tapered shape such that the housing has a smaller inner diameter at a distal handpiece side as compared to the inner diameter of the housing at the second proximal handpiece side. The housing is configured such that the connector can not pass though the housing (i.e. the housing has a corresponding diameter). That is, at least the inner diameter of the housing at the distal handpiece side is smaller than the outer diameter of the connector. Therefore, the outer circumference of the connector is in touch with the inner circumference of the housing at a predefined location of the housing. As a result, by specifically forming the housing, the connecter is positioned in a specific position within the housing.

According to a further aspect of the present invention, the nozzle arrangement is attached to the connector (details are provided below). Accordingly, the nozzle arrangement is provided at the distal handpiece side of the housing. In addition, the nozzle arrangement has an outer diameter that is larger than the inner diameter of the housing such that the housing is not pulled or pushed over the nozzle arrangement. Consequently, by attaching the nozzle arrangement to the connector, the housing is mechanically sandwiched between the connector (i.e. the circumference of the connector that is in touch with the housing) and the nozzle arrangement. That is, a holding force applied by the connector on the housing is uniformly applied in a radial direction of the connector onto the housing. Accordingly, a local weakening of the housing is avoided.

Preferably, the handpiece comprises a connector fixing part provided at the first axial side of the connector, wherein the connector fixing part holds the connector within the handpiece such that the plastic housing is fixed in sandwich between the nozzle arrangement and the connector fixing part, when the nozzle arrangement is attached to the handpiece. That is, in this case the connector dose not have to be necessarily in touch with the housing in a direct manner.

According to a further aspect of the present invention, the connector fixing part supports the connector within the handpiece by means of clamping. The connector fixing part is provided at the same side from which the supply system is inserted into the connector (i.e. the second proximal handpiece side). The connector fixing part includes an elastic portion, which surrounds at least a part of the connector and applies a pressing force onto the outer surface of the connector. By such pressing force, the connector is held in place within the handpiece. As a result, the connector is supported by the connector fixing part such that the connector is positioned centralized within the handpiece. Further, the connector fixing part includes a ring element that forms an axial end of the handpiece at the same side from which the supply system is inserted into the connector (i.e. the second proximal handpiece side). The ring element forms a part of the housing of the handpiece. Further, the ring element comprises an abutment surface being substantially orthogonal to the handpiece axis and abutting against the housing. In other words, the abutment surface faces towards the distal handpiece side. The ring element has the same outer diameter than the housing at its tip at the second proximal handpiece side. Therefore, the abutment surface prevents the housing from falling off the handpiece. In case the nozzle arrangement is attached to the handpiece, the housing is sandwiched between the connector fixing part (that is the abutment surface) and the nozzle arrangement, which also includes an abutment surface against which the housing abuts. As a result, the housing is held in position by being sandwiched between two abutment surfaces (i.e. of the nozzle arrangement and of the connector fixing part) without the need for any further mechanical fixation means. Further, the holding force applied onto the housing is a force acting in an axial direction of the housing. Therefore, the stability of the housing is further improved. As a result, the handpiece exhibits an increased robustness against thermal strains. In addition, the housing is easily demounted or exchanged, when the nozzle arrangement is detached from the handpiece and is exchanged against another one. For example, each user has his or her own specifically formed housing adopted to the specific user's finger, for example. Further, the housing is detached from the handpiece before a sterilization cycle starts. In this case, the housing is treated in another way that is more suitable for a plastic housing as compared to being exposed to a plurality of cycles including application of high thermal strains.

Preferably, the connector is configured to receive a coaxial supply line of the supply system such that the first port and the second port can be separately supplied with powder mixed with air and water, respectively.

According to a further aspect of the present invention, the supply system includes a coaxial supply line, which is configured to separately supply both the powder and air mixture and water. For example, the coaxial supply line is realized as a cord connector. Therefore, the supply system has a sufficient elasticity so as to provide a convenient operation for a user. The coaxial supply line has discharge ports that correspond to the first and second port of the connector. Further, the coaxial supply line includes sealing means (for example sealing rings) for sealing both ports, when installed inside the connector.

Preferably the connector includes a screwing socket for fixing the first supply line and or the second supply line of the nozzle arrangement to the handpiece.

According to a further aspect of the present invention, the screwing socket is provided at the second axial side of the connector. The nozzle arrangement is fixed to the connector by the screwing socket. Accordingly, the nozzle arrangement and the connector are rotatable relative to each other.

Preferably the connector has a stepped inner contour.

According to a further aspect of the present invention, the second port is provided at a stepped surface. That is, the stepped surface faces towards the second proximal handpiece side. That is, the stepped surface at which the second port is provided is be orthogonal to the handpiece axis. Further, the stepped surface has a substantially ring-like shape and is used as an abutment surface for the supply system inserted into the connector. In addition, the stepped surfaces are used to seal regions of the first port and of the second port from each other. Therefore, the first port and the second port are separately supplied from the supply system.

Preferably the connector includes a RFID tag arranged on its outer surface.

According to a further aspect of the present invention, the RFID tag is used to identify the specific kind of the handpiece. That is, there are a plurality of different handpieces depending on the treatment that is to be executed by the handpiece, or for different users. Such information is attained via the RFID tag. Providing the RFID tag outside of the connector secures that the RFID tag is close to the outer surface of the handpiece and is thus easily be detected via corresponding detecting system.

Preferably, the first port is arranged centralized in the connector and wherein the second port is eccentrically arranged in the connector.

According to a further aspect of the present invention, the first port is used to transfer the powder and air mixture which is a highly abrasive mixture. Therefore, any curvature or curve enhances wearing of the corresponding region within the supply line. Therefore, according to an aspect of the present embodiment, the powder and air mixture is guided substantially straight through the supply system and handpiece via the first port into the first supply line of the nozzle arrangement without any significant changes of the flowing direction. As a result, the wearing of the supply line is significantly reduced. On the other hand, water is much less abrasive and could therefore be redirected several times without any significant disadvantages with respect to wearing of a transfer line. As a result, the second port is arranged eccentrical without any significant disadvantages with respect to the wearing.

Preferably the first port is configured such that the first supply line protrudes into the connector along the handpiece axis, when the nozzle arrangement is attached to the handpiece.

According to a further aspect of the present invention, the first supply line extends through the first port so as to protrude into the inner space of the connector. As a result, the opening or entrance to the first supply line is arranged within the connector spaced apart from the end of the connector at the second axial side of the connector. Due to the protrusion into the inner space of the connector, the risk is further reduced, that water is inserted into the first port. In more detail, if the part of the supply system that is inserted into the connector, pushes water droplets in front thereof further into the connector, the droplets pass the entrance of the first supply line without entering into the first supply line and accumulate behind the opening of the first supply line. As a result, no water is inserted into the first supply line. The first port is positioned on the handpiece axis. The protrusion amount of the first supply line into the connector is 0.8 to 1.2 times the mean diameter of the connector. Further, the first port includes a sealing means for sealing the first port in case the first supply line extends through the first port. Such sealing means is a sealing ring.

According to a further aspect of the present invention, a system for treatment of tooth by means of a jet of an abrasive powder mixed with air and water is provided, the system comprising: a handpiece as described above, a nozzle arrangement attachable to the handpiece, including a first supply line for transferring powder mixed with air to a nozzle discharge line, and a second supply line for transferring water to the nozzle discharge line, wherein the first supply line communicates with the first port and the second supply line communicates with the second port, and a supply system including a cord connector connectable to the connector of the handpiece.

The above defined features and advantages with respect to the handpiece, are also applicable to the inventive system.

According to a further aspect of the present invention a method for connecting or disconnecting a handpiece is provided, the method comprising: providing a handpiece as described above, connecting a nozzle arrangement to the handpiece, the nozzle arrangement including a first supply line for transferring powder mixed with air to a nozzle discharge line, and a second supply line for transferring water to the nozzle discharge line, such that the first supply line communicates with the first port and the second supply line communicates with the second port, and connecting the handpiece with a supply system by inserting a cord connector of the supply system into the connector of the handpiece or disconnecting the handpiece and a supply system by pulling out a cord connector of the supply system, of the connector of the handpiece.

According to a further aspect of the present invention, during the insertion of the cord connector into the connector air and/or water existing within the connector is pushed out of the connector through the exhaust opening. Therefore, it is avoided that water enters into the first port. In addition, during pulling out of the cord connector, air is introduced through the exhaust opening into the connector such that no water is aspirated by the piston effect out of the second port and/or the supply system. As a result, a water accumulation within the connector is avoided.

The advantages and features described in connection with the device are also applicable to the method and vice versa.

Wherever not already described explicitly, individual embodiments or their individual aspects and features can be combined or exchanged with one another without limiting or widening the scope of the described invention, whenever such a combination or exchange is meaningful and in the sense of this invention. Advantages, which are described with respect to one aspect of the present invention are, wherever applicable also advantages of other aspects of the present invention.

### BRIEF DESCRIPTION OF THE DRAWINGS

In the drawings is:
- Fig. 1: a sectional view of a handpiece that does not have all features of the pre-sent invention,
- Fig. 2: a visualization of a part of a supply system connectable to a handpiece according to the present invention
- Fig. 3: a visualization of a connector that does not have all features of the present invention,
- Fig. 4: a sectional view of a handpiece according to an embodiment of the pre-sent invention,
- Fig. 5: a visualization of a connector according to an embodiment of the present invention, and
- Fig. 6: a sectional view of a handpiece according to an embodiment of the pre-sent invention.

### DETAILED DESCRIPTION

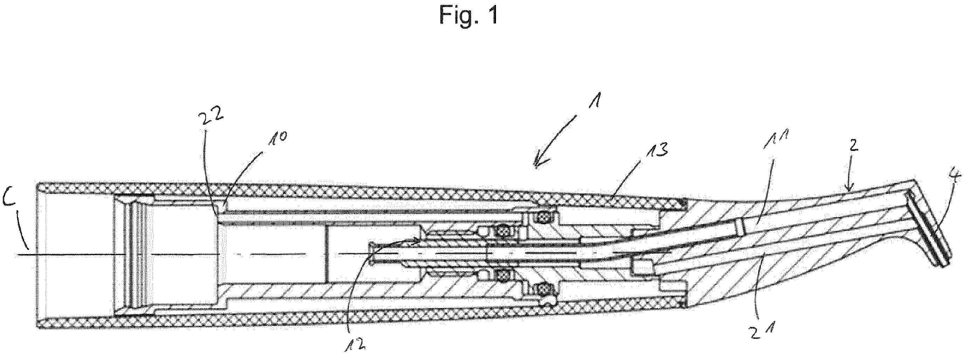

Fig. 1 is a sectional view of a handpiece 1. Further, in Fig. 1 a nozzle arrangement 2 is depicted, wherein the nozzle arrangement 2 is attached to the handpiece 1 and a supply system 3 is detached from the handpiece 1. The nozzle arrangement 2 is removably attached to the handpiece 1. Further, the handpiece 1 comprises an integral connector 10, arranged within the handpiece 1. The handpiece 1 is an elongated body extending along its handpiece axis C. The connector 10 is a tubular element having a hollow inner space. In addition, the connector 10 comprises a first port 12 and a second port 22, which are open to the inner space of the connector 10. The first port 12 and the second port 22 are connecting the inner space of the connector 10 with the outside of the connector 10. In the partly connected state depicted in Fig. 1, the first port 12 is in communication with a first supply line 11 through which powder mixed with air can be supplied to the nozzle arrangement 2. In more detail the first supply line 11 extends through the first port 12 and protrudes into the connector 10. The second port 22 is in communication with a second supply line 12 through which water can be supplied to the nozzle arrangement 2. In the present embodiment the first supply line 11 and the second supply line 12 are part of the nozzle arrangement 2. Moreover, the second port 22 includes a connector supply line which extends through the material of the connector 10. In more detail, the connector supply line extends parallel to the handpiece axis C. That is, the connector supply line is located downstream of the second port 22 and upstream of the second supply line with respect to a water flow direction in operation of the handpiece 1. The second port 22 is eccentrically arranged within the connector 10. On the other hand, the first port 12 is centralized arranged on the handpiece axis C within the connector 10.

In addition, the connector 10 has a stepped shape, that is, the connector 10 has steps on its outer surface and on its inner surface. The second port 22 is open at an inner stepped surface. The second port 22 is flush with the stepped surface. The stepped surface is arranged orthogonal to the handpiece axis C. The first supply line 11 protrudes from a second axial side of the connector 10 into the inner space of the connector 10. That is, the first port (i.e. the opening at which the air-powder mixture enters the first supply line) is arranged within the connector 10 spaced apart from an axial end of the connector 10.

The handpiece 1 further includes a housing 13 made of plastic that surrounds the connector 10. The housing 13 includes a gripping portion for a user's hand. The gripping portion is configured to provide a sufficient grip such that the user can securely hold and operate the handpiece. Further, the housing 13 is configured to isolate the user's hand from heat. That is, in order to improve a patient's comfort, hot water is used in treatment and is thus supplied through the handpiece. Therefore, the connector has a high temperature due to the hot water flowing therethrough. The housing 13 thus protects the user's hand from the hot connector 10.

In the present embodiment, the connector 10 is a one-piece element, that is, the connector 10 is made of one solid piece. In other words, the connector 10 of the present embodiment is not composed of a plurality of separate members. Therefore, no connection is necessary to join the several parts together. As a result, the connector 10 is robust and resistant against thermal loads (e.g. occurring during sterilization cycles). The integral connector 10 of the present embodiment is made of stainless steel.

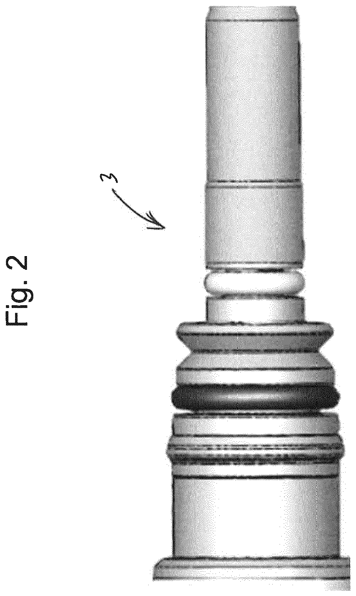

In Fig. 2 a part of the supply system 3 is depicted. In the present embodiment the part is a cord connector that comprises discharge ports for powder mixed with air and water that correspond to the first port 12 and to the second port 22, when the cord connector is inserted into the handpiece 1 (that is into the connector 10). The cord connector has a flexible connection to the rest of the supply system 3 such that a user freely operates the handpiece when the supply system is connected thereto.

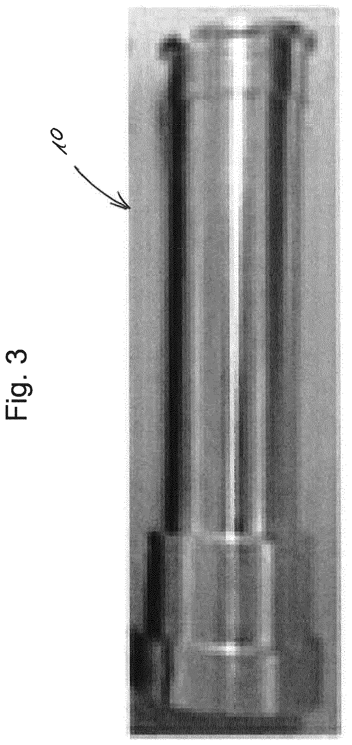

In Fig. 3 the connector 10 is depicted. Further, in Fig. 3 the stepped outer surface of the connector is visible. The left side of Fig. 3 corresponds to the first axial side of the connector 10 and the right side of the connector in Fig. 3 corresponds to the second axial side of the connector 10. In the present embodiment, the outer and inner contour of the connector 10 is manufactured using a turning machine. Further, each step of the connector 10 has a different outer diameter. Therefore, the connector 10 is optimal fitted to the housing 13.

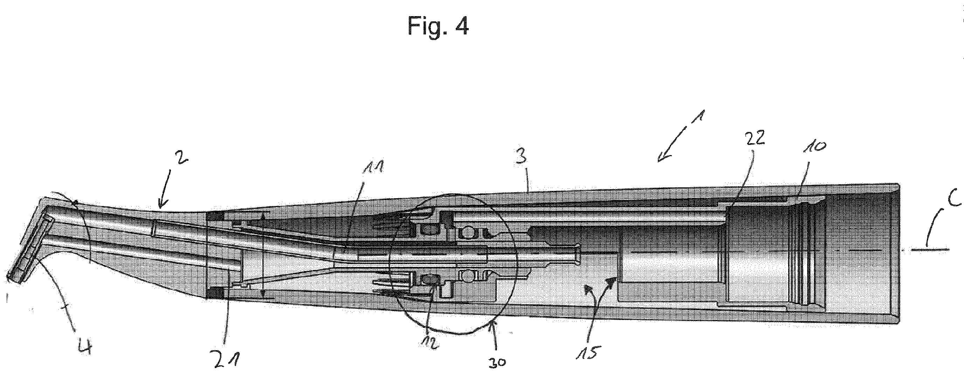

In Fig. 4 a sectional view of the handpiece 1, according to an embodiment of the present invention is depicted. The handpiece 1 of the present embodiment differs from the handpiece 1 of the previous described embodiment in that the connector 10 includes an exhaust opening 15. The exhaust opening 15 is formed in circumference surface of the connector 10 at a location where the first port 12 is arranged (i.e. the opening of the first supply line 11). The exhaust opening 15 is created by removing a part of the circumference wall of the connector 10. In the present embodiment the first supply line 12 protrudes through the first port 11 into the connector 10. The exhaust opening 15 has an extension along the handpiece axis C that is larger than its extension in the circumference direction of the connector 10. That is, the exhaust opening 15 has a rectangular shape in a plan view.

The exhaust opening 15 is arranged such that the tip of the first supply line 12 extending into the connector 10 is located essentially centralized with respect to the exhaust opening. Further, the part of the connector supply line that is arranged within the connector 10 downstream of the second port 22 is arranged on the opposite side of the exhaust opening 15 with respect to the handpiece axis C.

Further, the handpiece 1 of the present invention includes a screw assembly 30 for fixing the nozzle arrangement 2 to the handpiece 1.

In addition, the handpiece 1 includes a receiving part for receiving at least a part of the nozzle arrangement 2. The receiving part has a funnel shape and has its larges diameter at the distal handpiece side. Therefore, the first supply line 11 of the nozzle arrangement 2 is easily guided toward the first port 12 of the connector 10 during insertion. Further, through the receiving part the water is supplied to the discharging line 4 of the nozzle arrangement 2. That is, the second port 22 and the second supply line 21 of the nozzle arrangement communicate with the receiving part.

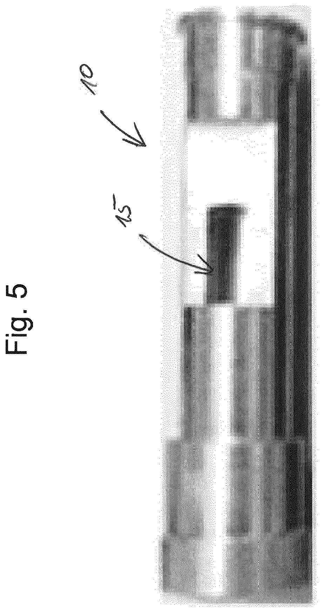

Fig. 5 is a view of the connector 10, according to an embodiment of the present invention. The connector 1 includes the exhaust opening 15. In Fig. 5 it is visible that the rounded outer surface of the connector 10 is cut away, such that a plane part on the outer surface of the connector 10 is created. This form can be easily achieved by a milling machine, for example.

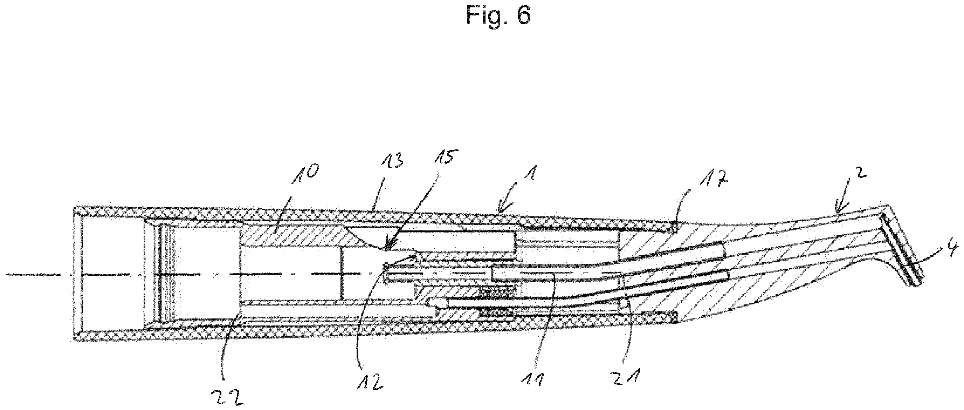

In Fig. 6 a further embodiment of the present invention is depicted. The handpiece 1 of the present embodiment differs from the embodiment depicted in Fig. 4 in that the receiving part is omitted. On the other hand, in the present embodiment the second supply line 21 is directly connected to the connector supply line of the connector 10 if the nozzle arrangement 2 is connected to the handpiece 1. As a result, the volume of water included within the headpiece 1 during operation is reduced. Accordingly, the handpiece is lighter and thus has an improved operability.

The above described embodiments may be combined with each other as a whole or only individual features may be combined to form new embodiments within the scope of the appended claims.

### Reference signs

- 1: handpiece
- 2: nozzle arrangement
- 3: supply system
- 4: nozzle discharge line
- 10: connector
- 11: first supply line
- 12: first port
- 13: housing
- 14: connector fixing part
- 15: exhaust opening
- 16: abutment phase of the connector fixing part
- 17: abutment face of the nozzle arrangement
- 18: elastical portion
- 21: second supply line
- 22: second port
- 30: screw assembly
- 100: system

## Claims

1. A handpiece (1) for use in treatment of tooth by means of a jet of an abrasive powder mixed with air, the handpiece (1) being an elongated member extending along a handpiece axis (C), the handpiece (1) comprising:
a tubular connector (10) extending along the handpiece axis (C),
wherein the connector (10) is configured to be connected to a supply system (3) at a first axial side of the connector (10),
wherein the connector (10) has at least two ports at a second axial side of the connector (10), a first port (12) configured to be connected to a first supply line (11) of a nozzle arrangement (2) and a second port (22) configured to be connected to a second supply line (21) of the nozzle arrangement (32),
wherein the first port (12) and the second port (22) are arranged offset to each other along the handpiece axis (C),
wherein the connector (10) is an integral element, preferably a mono block element, and
wherein the connector (10) is made of metal, wherein the connector (10) includes an exhaust opening (15) at the circumference surface of the connector (10), wherein the exhaust opening (15) is configured to connect the inside of the connector (10) with the outside of the connector (10), **characterized by** the exhaust opening (15) being located at the same position as compared to the first port (12) with respect to the handpiece axis.

2. The handpiece (1) according to claim 1, wherein the exhaust opening (15) is formed in the connector (10) so as to be adjacent to the first port (12).

3. The handpiece (1) according to claim 1 or 2, wherein the connector (10) is configured to transfer air and/or water through the exhaust opening (15).

4. The handpiece (1) according to any one of claims 1 to 3, wherein the exhaust opening (15) has a larger passage area as compared to that of the first port (12).

5. The handpiece (1) according to any one of the preceding claims, wherein the handpiece (1) includes a plastic housing (13) at least partly surrounding the connector (10).

6. The handpiece (1) according to claim 5, wherein the handpiece (1) comprises a connector fixing part (14) provided at the first axial side of the connector (10), wherein the connector fixing part (14) holds the connector (10) within the handpiece (1) such that the plastic housing (13) is fixed in sandwich between the nozzle arrangement (2) and the connector fixing part (14), when the nozzle arrangement (2) is attached to the handpiece (1).

7. The handpiece (1) according to any one of the preceding claims, wherein the connector (1) is configured to receive a coaxial supply line of the supply system (3) such that the first port (12) and the second port (22) can be separately supplied with powder mixed with air and water, respectively.

8. The handpiece (1) according to any one of the preceding claims, wherein the connector (10) includes a screwing socket for fixing the first supply line (11) and or the second supply line (21) of the nozzle arrangement (2) to the handpiece (1).

9. The handpiece (1) according to any one of the preceding claims, wherein the connector (10) has a stepped inner contour.

10. The handpiece (1) according to any one of the preceding claims, wherein the connector (10) includes a RFID tag arranged on its outer surface.

11. The handpiece (1) according to any one of the preceding claims, wherein the first port (12) is arranged centralized in the connector (10) and wherein the second port (22) is eccentrically arranged in the connector (10).

12. The handpiece (1) according to any one of the preceding claims, wherein the first port (12) is configured such that the first supply line (11) protrudes into the connector (10) along the handpiece axis (C), when the nozzle arrangement (2) is attached to the handpiece (1).

13. A system (100) for treatment of tooth by means of a jet of an abrasive powder mixed with air and water, comprising:
a handpiece (1) according to any one of the preceding claims,
a nozzle arrangement (2) attachable to the handpiece (1), including a first supply line (12) for transferring powder mixed with air to a nozzle discharge line (4), and a second supply line (22) for transferring water to the nozzle discharge line (4), wherein the first supply line (12) communicates with the first port (11) and the second supply line (22) communicates with the second port (21), and
a supply system (3) including a cord connector connectable to the connector (3) of the handpiece (1).

14. Method for connecting or disconnecting a handpiece (1), the method comprising:
providing a handpiece (1) according to any one of claims 1 to 13,
connecting a nozzle arrangement (2) to the handpiece (1), the nozzle arrangement (2) including a first supply line (12) for transferring powder mixed with air to a nozzle discharge line (4), and a second supply line (22) for transferring water to the nozzle discharge line (4), such that the first supply line (12) communicates with the first port (11) and the second supply line (22) communicates with the second port (21), and
connecting the handpiece (1) to a supply system (3) by inserting a cord connector of the supply system (3) into the connector (10) of the handpiece (1), or
disconnecting the handpiece (1) and a supply system (3) by pulling out a cord connector of the supply system (3), of the connector (10) of the handpiece (1).

## Patentansprüche

1. Handstück (1) zur Verwendung bei der Behandlung von Zähnen mittels eines mit Luft vermischten Strahls eines abrasiven Pulvers, wobei das Handstück (1) ein längliches Element ist, das sich entlang einer Handstückachse (C) erstreckt, wobei das Handstück (1) Folgendes aufweist:
ein rohrförmiges Verbindungsstück (10), das sich entlang der Handstückachse (C) erstreckt,
wobei das Verbindungsstück (10) dazu konfiguriert ist, an einer ersten axialen Seite des Verbindungsstücks (10) an ein Zufuhrsystem (3) angeschlossen zu werden,
wobei das Verbindungsstück (10) mindestens zwei Anschlüsse an einer zweiten axialen Seite des Verbindungsstücks (10) aufweist, einen ersten Anschluss (12), der dazu konfiguriert ist, an eine erste Versorgungsleitung (11) einer Düsenanordnung (2) angeschlossen zu werden, und einen zweiten Anschluss (22), der dazu konfiguriert ist, an eine zweite Versorgungsleitung (21) der Düsenanordnung (32) angeschlossen zu werden,
wobei der erste Anschluss (12) und der zweite Anschluss (22) entlang der Handstückachse (C) versetzt zueinander angeordnet sind,
wobei das Verbindungsstück (10) ein integrales Element, bevorzugt ein Einblockelement, ist und
wobei das Verbindungsstück (10) aus Metall gefertigt ist, wobei das Verbindungsstück (10) eine Auslassöffnung (15) an der Umfangsfläche des Verbindungsstücks (10) umfasst, wobei die Auslassöffnung (15) dazu konfiguriert ist, das Innere des Verbindungsstücks (10) mit dem Äußeren des Verbindungsstücks (10) zu verbinden, **dadurch gekennzeichnet, dass** die Auslassöffnung (15) in Bezug auf die Handstückachse an derselben Position wie der erste Anschluss (12) positioniert ist.

2. Handstück (1) nach Anspruch 1, wobei die Auslassöffnung (15) in dem Verbindungsstück (10) so ausgebildet ist, dass sie an den ersten Anschluss (12) angrenzt.

3. Handstück (1) nach Anspruch 1 oder 2, wobei das Verbindungsstück (10) dazu konfiguriert ist, Luft und/oder Wasser durch die Auslassöffnung (15) zu leiten.

4. Handstück (1) gemäß einem der Ansprüche 1 bis 3, wobei die Auslassöffnung (15) einen größeren Durchgangsbereich als der erste Anschluss (12) aufweist.

5. Das Handstück (1) gemäß einem der vorhergehenden Ansprüche, wobei das Handstück (1) ein Kunststoff-Gehäuse (13) einschließt, das das Verbindungsstück (10) zumindest teilweise umgibt.

6. Handstück (1) nach Anspruch 5, wobei das Handstück (1) ein Verbindungsstück-Befestigungsteil (14) umfasst, das an der ersten axialen Seite des Verbindungsstücks (10) vorgesehen ist, wobei das Verbindungsstück-Befestigungsteil (14) das Verbindungsstück (10) innerhalb des Handstücks (1) hält, so dass das Kunststoff-Gehäuse (13) zwischen der Düsenanordnung (2) und dem Verbindungsstück-Befestigungsteil (14) sandwichartig eingeklemmt ist, wenn die Düsenanordnung (2) an das Handstück (1) angebracht wird.

7. Handstück (1) gemäß einem der vorhergehenden Ansprüche, wobei das Verbindungsstück (1) dazu konfiguriert ist, eine koaxiale Versorgungsleitung des Zufuhrsystems (3) aufzunehmen, so dass der erste Anschluss (12) und der zweite Anschluss (22) separat mit Pulver, das mit Luft bzw. Wasser vermischt ist, versorgt werden können.

8. Handstück (1) gemäß einem der vorhergehenden Ansprüche, wobei das Verbindungsstück (10) eine Schraubfassung zur Befestigung der ersten Versorgungsleitung (11) und/oder der zweiten Versorgungsleitung (21) der Düsenanordnung (2) an dem Handstück (1) einschließt.

9. Handstück (1) gemäß einem der vorhergehenden Ansprüche, wobei das Verbindungsstück (10) eine abgestufte Innenkontur aufweist.

10. Handstück (1) gemäß einem der vorhergehenden Ansprüche, wobei das Verbindungsstück (10) einen RFID-Tag umfasst, der auf seiner äußeren Oberfläche angeordnet ist.

11. Handstück (1) gemäß einem der vorhergehenden Ansprüche, wobei der erste Anschluss (12) zentral in dem Verbindungsstück (10) angeordnet ist und wobei der zweite Anschluss (22) exzentrisch in dem Verbindungsstück (10) angeordnet ist.

12. Handstück (1) gemäß einem der vorhergehenden Ansprüche, wobei der erste Anschluss (12) dazu konfiguriert ist, dass die erste Versorgungsleitung (11) entlang der Handstückachse (C) in das Verbindungsstück (10) hineinragt, wenn die Düsenanordnung (2) an dem Handstück (1) angebracht ist.

13. System (100) zur Behandlung von Zähnen mittels eines Strahls eines mit Luft und Wasser vermischten abrasiven Pulvers, das Folgendes aufweist:
ein Handstück (1) gemäß einem der vorangehenden Ansprüche,
eine Düsenanordnung (2), die an dem Handstück (1) anbringbar ist, umfassend eine erste Versorgungsleitung (12) zum Übertragen von mit Luft vermischtem Pulver zu einer Düsenauslassleitung (4) und eine zweite Versorgungsleitung (22) zum Übertragen von Wasser zu der Düsenauslassleitung (4), wobei die erste Versorgungsleitung (12) mit dem ersten Anschluss (11) in Verbindung steht und die zweite Versorgungsleitung (22) mit dem zweiten Anschluss (21) in Verbindung steht, und
ein Zufuhrsystem (3), dass ein Kabelverbindungsstück umfasst, das an das Verbindungsstück (3) des Handstücks (1) anschließbar ist.

14. Verfahren zum Anschließen oder Trennen eines Handstücks (1), wobei das Verfahren Folgendes umfasst:
Bereitstellen eines Handstücks (1) gemäß einem der Ansprüche 1 bis 13, anschließen einer Düsenanordnung (2) an das Handstück (1), wobei die Düsenanordnung (2) eine erste Versorgungsleitung (12) zum Übertragen von mit Luft vermischtem Pulver zu einer Düsenauslassleitung (4) und eine zweite Versorgungsleitung (22) zum Übertragen von Wasser zu der Düsenauslassleitung (4) umfasst, so dass die erste Versorgungsleitung (12) mit dem ersten Anschluss (11) in Verbindung steht und die zweite Versorgungsleitung (22) mit dem zweiten Anschluss (21) in Verbindung steht, und
anschließen des Handstücks (1) an ein Zufuhrsystem (3) durch Einführen eines Kabelverbindungsstücks des Zufuhrsystems (3) in das Verbindungsstück (10) des Handstücks (1) oder
Trennen des Handstücks (1) und eines Zufuhrsystems (3) durch Herausziehen eines Kabelverbindungsstücks des Zufuhrsystems (3) aus dem Verbindungsstück (10) des Handstücks (1).

## Revendications

1. Pièce à main (1) destinée à être utilisée pour le traitement des dents au moyen d'un jet de poudre abrasive mélangée à de l'air, la pièce à main (1) étant un élément allongé s'étendant le long d'un axe de pièce à main (C), la pièce à main (1) comprenant :
un connecteur tubulaire (10) s'étendant le long de l'axe de pièce à main (C), dans laquelle
le connecteur (10) est configuré pour être connecté à un système d'alimentation (3) au niveau d'un premier côté axial du connecteur (10),
le connecteur (10) comprend au moins deux ports sur un deuxième côté axial du connecteur (10), à savoir un premier port (12) configuré pour être connecté à une première conduite d'alimentation (11) d'un ensemble de buse (2) et un deuxième port (22) configuré pour être connecté à une deuxième conduite d'alimentation (21) de l'ensemble de buse (32),
le premier port (12) et le deuxième port (22) sont disposés de manière décalée l'un par rapport à l'autre le long de l'axe de pièce à main (C),
le connecteur (10) est un élément intégral, de préférence un élément monobloc, et
le connecteur (10) est réalisé en métal,
le connecteur (10) présente une ouverture de sortie (15) sur la surface circonférentielle du connecteur (10), l'ouverture de sortie (15) étant configurée pour relier l'intérieur du connecteur (10) à l'extérieur du connecteur (10),
**caractérisée en ce que** l'ouverture de sortie (15) est située dans la même position que le premier port (12) par rapport à l'axe de la pièce à main.

2. Pièce à main (1) selon la revendication 1,
dans laquelle l'ouverture de sortie (15) est formée dans le connecteur (10) de manière à être adjacente au premier port (12).

3. Pièce à main (1) selon la revendication 1 ou 2,
dans laquelle le connecteur (10) est configuré pour transférer de l'air et/ou de l'eau à travers l'ouverture de sortie (15).

4. Pièce à main (1) selon l'une des revendications 1 à 3,
dans laquelle l'ouverture de sortie (15) présente une zone de passage plus grande que celle du premier port (12).

5. Pièce à main (1) selon l'une des revendications précédentes,
dans laquelle la pièce à main (1) comprend un boîtier en matière plastique (13) entourant au moins partiellement le connecteur (10).

6. Pièce à main (1) selon la revendication 5,
dans laquelle la pièce à main (1) comprend une partie de fixation de connecteur (14) prévue sur le premier côté axial du connecteur (10),
la partie de fixation de connecteur (14) maintient le connecteur (10) à l'intérieur de la pièce à main (1) de sorte que le boîtier en matière plastique (13) est pris en sandwich entre l'ensemble de buse (2) et la partie de fixation de connecteur (14), lorsque l'ensemble de buse (2) est fixé à la pièce à main (1).

7. Pièce à main (1) selon l'une des revendications précédentes,
dans laquelle le connecteur (1) est configuré pour recevoir une conduite d'alimentation coaxiale du système d'alimentation (3) de sorte que le premier port (12) et le deuxième port (22) peuvent chacun être alimentés séparément en poudre mélangée à de l'air et à de l'eau.

8. Pièce à main (1) selon l'une des revendications précédentes,
dans laquelle le connecteur (10) comprend une douille de vissage pour fixer la première conduite d'alimentation (11) et/ou la deuxième conduite d'alimentation (21) de l'ensemble de buse (2) à la pièce à main (1).

9. Pièce à main (1) selon l'une des revendications précédentes,
dans laquelle le connecteur (10) présente un contour intérieur en escalier.

10. Pièce à main (1) selon l'une des revendications précédentes,
dans laquelle le connecteur (10) comprend une étiquette RFID disposée sur sa surface extérieure.

11. Pièce à main (1) selon l'une des revendications précédentes,
dans laquelle le premier port (12) est disposé de manière centrée dans le connecteur (10), et le deuxième port (22) est disposé de manière excentrée dans le connecteur (10).

12. Pièce à main (1) selon l'une des revendications précédentes,
dans laquelle le premier port (12) est configuré de telle sorte que la première conduite d'alimentation (11) fait saillie dans le connecteur (10) le long de l'axe de pièce à main (C), lorsque l'ensemble de buse (2) est fixé à la pièce à main (1).

13. Système (100) pour le traitement des dents au moyen d'un jet de poudre abrasive mélangée à de l'air et à de l'eau, comprenant :
une pièce à main (1) selon l'une des revendications précédentes,
un ensemble de buse (2) pouvant être fixé à la pièce à main (1), comprenant une première conduite d'alimentation (12) pour transférer la poudre mélangée à l'air vers une conduite de décharge de buse (4), et une deuxième conduite d'alimentation (22) pour transférer l'eau vers la conduite de décharge de buse (4), la première conduite d'alimentation (12) communiquant avec le premier port (11), et la deuxième conduite d'alimentation (22) communiquant avec le deuxième port (21), et
un système d'alimentation (3) comprenant un connecteur à câble pouvant être connecté au connecteur (3) de la pièce à main (1).

14. Procédé de connexion ou de déconnexion d'une pièce à main (1), le procédé consistant à :
fournir une pièce à main (1) selon l'une des revendications 1 à 13,
connecter un ensemble de buse (2) à la pièce à main (1), l'ensemble de buse (2) comprenant une première conduite d'alimentation (12) pour transférer de la poudre mélangée à de l'air vers une conduite de décharge de buse (4), et une deuxième conduite d'alimentation (22) pour transférer de l'eau vers la conduite de décharge de buse (4), de sorte que la première conduite d'alimentation (12) communique avec le premier port (11) et que la deuxième conduite d'alimentation (22) communique avec le deuxième port (21), et
connecter la pièce à main (1) à un système d'alimentation (3) en insérant un connecteur à câble du système d'alimentation (3) dans le connecteur (10) de la pièce à main (1), ou
déconnecter la pièce à main (1) et un système d'alimentation (3) en retirant un connecteur à câble du système d'alimentation (3) hors du connecteur (10) de la pièce à main (1).
